# EUROPÄISCHE PATENTSCHRIFT

(11) **EP 1 001 406 B1**
(45) Veröffentlichungstag und Bekanntmachung des Hinweises auf die Patenterteilung: **01.12.2004**
(21) Anmeldenummer: 99203619.4
(22) Anmeldetag: 02.11.1999
(51) Int. Cl.: G10L 15/22

(54) **Verfahren zur Benutzerunterstützung durch ein automatisches Spracherkennungssystem**
User support method by an automatic speech recognition system
Méthode d'assistance d'un utilisateur par un système automatique de reconnaissance de la parole

(30) Priorität: 09.11.1998 DE 19851520
(43) Veröffentlichungstag der Anmeldung: 17.05.2000
(73) Patentinhaber: Philips Intellectual Property & Standards GmbH, 20099 Hamburg (DE); Koninklijke Philips Electronics N.V., 5621 BA Eindhoven (NL)
(72) Erfinder: Peters, Jochen, Habsburgerallee 11 52064 Aachen (DE); Meinhard, Ulrich, Habsburgerallee 11 52064 Aachen (DE)
(74) Vertreter: Volmer, Georg, Dipl.-Ing.

(56) Entgegenhaltungen:
- EP-A- 0 671 840
- DE-A- 19 646 634
- KASPAR B ET AL: "SPRACHERKENNUNG FUER GROSSES VOKABULAR DURCH BUCHSTABIERREN" ITG FACHBERICHTE,DE,VDE VERLAG, BERLIN, Nr. 94, 28. April 1986 (1986-04-28), Seiten 31-36, XP000199294 ISSN: 0341-0196
- PATENT ABSTRACTS OF JAPAN vol. 1999, no. 11, 30. September 1999 (1999-09-30) & JP 11 167393 A (HITACHI ENG &SERVICE CO LTD), 22. Juni 1999 (1999-06-22)

## Beschreibung

Die Erfindung betrifft ein Verfahren zur Benutzerunterstützung durch ein automatisches Spracherkennungssystem in einem Eingabemodus zur Eingabe buchstabierter sprachlicher Äußerungen.

Bei Spracherkennungssystemen, insbesondere bei Diktiersystemen mit automatischer Spracherkennung, ist es bekannt einen Buchstabiermodus vorzusehen, der für solche Fälle zur Verfügung steht, wenn der Benutzer sprachliche Eingaben in das System tätigt, die dieses nicht mit ausreichender Sicherheit und/oder falsch erkennt.

Aus der GB 2 082 820 A ist ein solches System zur Umwandlung von Sprachsignalen in eine entsprechende schriftliche Form bekannt. Das beschriebene System weist eine Vorrichtung zur automatischen Spracherkennung (auch als "Übersetzer" bezeichnet) auf, die einem Benutzer einen Buchstabiermodus für die Fälle zur Verfügung stellt, in denen eine Umsetzung gesprochener Äußerungen in entsprechende codierte Signale im üblichen Eingabemodus vom System nicht durchgeführt werden kann. Allerdings führt ein solcher Eingabemodus zu hohen Fehlerraten, da Einzelbuchstaben von automatischen Spracherkennungssystemen nur sehr unzuverlässig erkannt und häufig verwechselt werden. Als Alternative wird für solche Fälle vorgeschlagen, die entsprechenden Eingabe nicht mittels Spracheingabe, sondern mittels Tastatureingabe zu tätigen.

Der Erfindung liegt nun die Aufgabe zugrunde, das eingangs genannte Verfahren so auszugestalten, daß die Zuverlässigkeit der Spracherkennungsergebnisse erhöht wird.

Die Aufgabe wird dadurch gelöst, daß eine automatische graphische Anzeige eines Buchstabieralphabets vorgesehen ist.

Der Benutzer kann nun unmittelbar eine Zuordnung einzelner Buchstaben zu zugehörigen Wörtern eines Buchstabieralphabets aus der graphischen Anzeige ablesen und anstelle einzelner Buchstaben nun die entsprechenden Wörter des Buchstabieralphabets zur Spracheingabe verwenden. Da die Wörter eines Buchstabieralphabets durch ein Spracherkennungssystem mit einer erheblich erhöhten Zuverlässigkeit gegenüber der Erkennung von Einzelbuchstaben richtig erkannt werden, wird die Spracherkennungsfehlerrate erheblich abgesenkt. Außerdem ist ein hoher Benutzerkomfort sichergestellt, denn der Benutzer muß das Buchstabieralphabet nicht auswendig gelernt haben, sondern kann es bequem aus der graphischen Anzeige ablesen.

Eine Möglichkeit zur Darstellung des Buchstabieralphabets besteht darin, daß das Buchstabieralphabet auf einem Bildschirm innerhalb eines Informationsfensters angezeigt wird. Hierdurch wird eine kompakte Darstellung in einem begrenzten Bereich des Bildschirms sichergestellt.

Die Ausgabe des Buchstabieralphabets erfolgt vorzugsweise in Form einer alphabetisch sortierten Liste. Eine andere Möglichkeit der Ausgabe des Buchstabieralphabets besteht in der Ausgabe in Form einer Schreibmaschinentastatur. Vorzugweise erfolgt die Ausgabe des Buchstabieralphabets in einem Bereich in der Nähe eines der Bildschirmränder, so daß der übrige Bereich des Bildschirms für andere Ausgaben zur Verfügung steht und eine übersichtliche Einteilung des Bildschirms sichergestellt ist.

Die Erfindung betrifft auch ein automatisches Spracherkennungssystem mit Vorrichtungen zur Durchführung des oben beschriebenen Verfahrens einschließlich seiner Ausgestaltungen.

Ausführungsbeispiele der Erfindung werden nachstehend anhand der Figuren näher erläutert. Es zeigen:

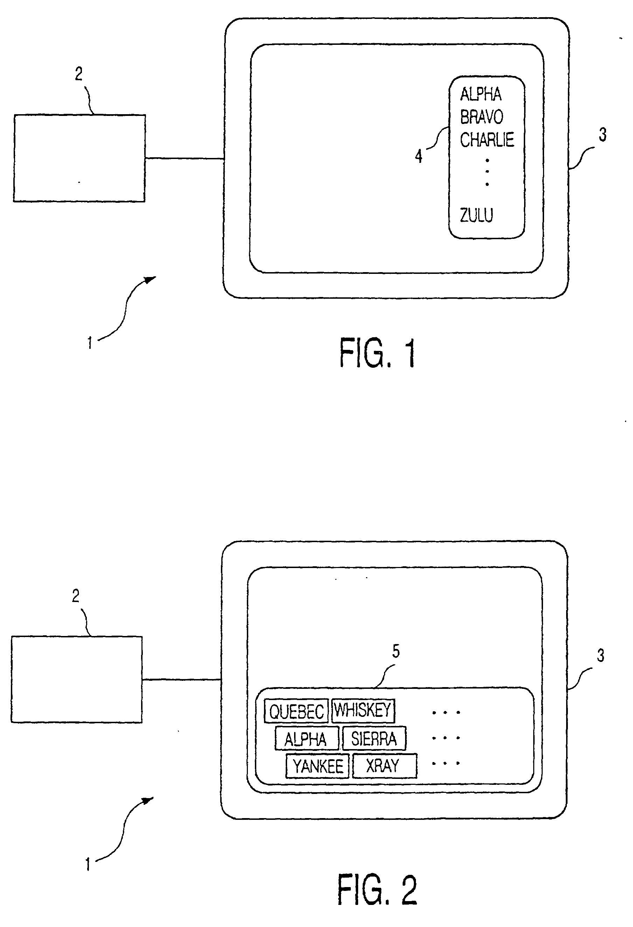

Fig. 1 und 2 Varianten der Ausgabe eines Buchstabieralphabets in einem Buchstabiermodus eines Spracherkennungssystems.

In Fig. 1 ist ein Spracherkennungssystem 1 dargestellt, dessen Komponenten bis auf einen Bildschirm 3, der als graphische Schnittstelle zu einem Benutzer dient, durch einen Funktionsblock 2 zusammengefaßt sind. Das Spracherkennungssystem ist vorzugsweise ein Diktiersystem. Der Funktionsblock 2 faßt Komponenten eines Spracherkennungssystems auf, das in üblicher Weise hier mittels eines Personal Computers und Spracherkennungssoftware realisiert wird.

Treten bei der Spracheingabe durch gesprochene fließende Sprache bei einem Diktat Probleme bei der Erkennung eines Wortes auf, so schaltet das Spracherkennungssystem zur Benutzerunterstützung in einen Buchstabiermodus um. In diesem Modus wird auf dem Bildschirm 3 innerhalb eines in der Nähe des rechten Bildschirmrandes angeordneten Informationsfensters 4 ein Buchstabieralphabet in alphabetischer Reihenfolge ausgegeben, beispielsweise - wie in Fig. 1 angedeutet - das internationale Buchstabieralphabet. Auch die Ausgabe des Fensters 4 an den anderen Bildschirmrändern ist selbstverständlich genauso geeignet. Der Benutzer kann nun bequem die Worte des Buchstabieralphabets ablesen, die zum Buchstabieren zu verwenden sind, die mit einer geringen Fehlerrate durch das Spracherkennungssytem 1 erkannt werden.

Eine weitere Variante des erfindungsgemäßen Spracherkennungssystems 1 bzw. Verfahrens zur Benutzerunterstützung zeigt Fig. 2. Dort ist dargestellt, daß das Buchstabieralphabet in einem am unteren Bildschirmrand angeordneten Fenster 5 in Form einer Schreibmaschinentastatur ausgeben wird. Die einzelnen Tasten der dargestellten Schreibmaschinentastatur werden dabei anstatt mit Buchstaben mit den entsprechenden Worten des Buchstabieralphabets beschriftet ausgegeben.

## Patentansprüche

1. Verfahren zur Benutzerunterstützung für ein automatisches Spracherkennungssystem (1) **dadurch gekennzeichnet, daß**
ein einem Eingabemodus zur Eingabe buchstabierter sprachlicher Äußerungen
eine automatische graphische Anzeige der Wörter eines Buchstabieralphabets (4) vorgesehen ist, die zum Buchstabieren zu vewenden sind.

2. Verfahren nach Anspruch 1,
**dadurch gekennzeichnet,**
**daß** das Buchstabieralphabet auf einem Bildschirm innerhalb eines Informationsfensters (4) angezeigt wird.

3. Verfahren nach einem der Ansprüche 1 oder 2,
**dadurch gekennzeichnet,**
**daß** das Buchstabieralphabet in Form einer alphabetisch sortierten Liste (4) ausgegeben wird.

4. Verfahren nach einem der Ansprüche 1 oder 2,
**dadurch gekennzeichnet,**
**daß** das Buchstabieralphabet in Form einer Schreibmaschinentastatur (5) ausgegeben wird.

5. Verfahren nach einem der Ansprüche 1 bis 4,
**dadurch gekennzeichnet,**
**daß** das Buchstabieralphabet in einem Bereich in der Nähe eines der Bildschirmränder ausgegeben wird.

6. Automatisches Spracherkennungssystem mit Vorrichtungen zur Durchführung des Verfahrens nach einem der Ansprüche 1 bis 5.

## Claims

1. A method of user support for an automatic speech recognition system (1), **characterized in that** in an input mode for entering spelled speech utterances, an automatic graphic display of the words of a spelling alphabet (4) is provided which words are to be used for the spelling.

2. A method as claimed in claim 1, **characterised in that** the spelling alphabet is shown on a picture screen inside an information window (4).

3. A method as claimed in one of the claim 1 or 2, **characterised in that** the spelling alphabet is displayed in the form of an alphabetically sorted list (4).

4. A method as claimed in one of the claims 1 or 2, **characterised in that** the spelling alphabet is displayed in the form of a typewriter keyboard (5).

5. A method as claimed in one of the claims 1 to 4, **characterised in that** the spelling alphabet is displayed in an area in the neighbourhood of one of the edges of the picture screen.

6. An automatic speech recognition system comprising devices for implementing the method as claimed in one of the claims 1 to 5.

## Revendications

1. Procédé d'assistance de l'utilisateur pour un système automatique de reconnaissance de la parole (1) **caractérisé en ce**
**que**, dans un mode d'entrée pour l'entrée d'expressions de parole épelées, un affichage graphique automatique des mots d'un alphabet d'épellation des lettres (4) est prévu et doit être utilisé pour l'épellation.

2. Procédé selon la revendication 1,
**caractérisé en ce**
**que** l'alphabet d'épellation des lettres est affiché sur un écran à l'intérieur d'une fenêtre d'information 4.

3. Procédé selon la revendication 1,
**caractérisé en ce**
**que** l'alphabet d'épellation des lettres est sorti sous la forme d'une liste (4) triée alphabétiquement.

4. Procédé selon l'une des revendications 1 ou 2,
**caractérisé en ce**
**que** l'alphabet d'épellation des lettres est sorti sous la forme d'un clavier de machine à écrire (5).

5. Procédé selon l'une des revendications 1 à 4,
**caractérisé en ce**
**que** l'alphabet d'épellation des lettres est sorti dans une zone à proximité d'un des bords de l'écran.

6. Système automatique de reconnaissance de la parole avec des dispositifs de mise en oeuvre du procédé selon l'une des revendications 1 à 5.
